# EUROPÄISCHE PATENTSCHRIFT

(11) **EP 0 580 954 B1**
(45) Veröffentlichungstag und Bekanntmachung des Hinweises auf die Patenterteilung: **25.03.1998**
(21) Anmeldenummer: 93105417.5
(22) Anmeldetag: 01.04.1993
(51) Int. Cl.: C08G 8/28, C08F 232/00, C08F 8/14, C09D 11/10, C08L 65/00, C08G 61/08

(54) **Modifiziertes Cyclopentadienharz**
Modified cyclopentadiene resin
Résine modifiée de cyclopentadiène

(30) Priorität: 08.04.1992 DE 4211721
(43) Veröffentlichungstag der Anmeldung: 02.02.1994
(73) Patentinhaber: HOECHST AKTIENGESELLSCHAFT, 65926 Frankfurt am Main (DE)
(72) Erfinder: Bender, Albert, Dr., W-6500 Mainz-Laubenheim (DE); Bothe, Lothar, Dr., W-6500 Mainz-Gonsenheim (DE); Finke, Manfred, Dr., W-6233 Kelkheim (DE); Werner, Gerhard, Dr., W-6246 Glashütten 1 (DE)

(56) Entgegenhaltungen:
- EP-A- 0 214 526
- DE-A- 2 150 216
- DE-A- 2 406 555
- FR-A- 2 488 613
- US-A- 4 574 057
- Römpp Chemielexikon, Bd.4 (1991), S.3107

## Beschreibung

Die Erfindung betrifft öllösliche, mit Naturharzen und Phenolharzen modifizierte Dicyclopentadienharze mit ausgezeichneter Veträglichkeit in Mineralölen und vegetabilen Ölen, die vorteilhaft als Bindemittelharze in Offsetdruckfarben eingesetzt werden können, sowie Verfahren zu ihrer Herstellung.

Aus der DE-A 21 50 216 sind modifizierte Naturharzprodukte bekannt, die durch Umsetzung von Massenanteilen bezogen auf das Reaktionsprodukt von 15 bis 85 % Naturharzen, 0,2 bis 20 % an ungesättigten Monomeren wie Styrol, alpha-Methylstyrol o.ä. und 1 bis 50 % an Phenolharzen oder deren Ausgangsprodukten hergestellt werden. Diese Harze weisen gute Löslichkeit in aromatenreichen Lösunsgmitteln auf.

Werden aus Umweltgründen aromatenarme Mineralöle statt aromatenreiche in Farben für den Offsetdruck eingesetzt, so sollten aufgrund der vergleichsweise schlechteren Lösekraft dieser Mineralöle die in der Formulierung verwendeten Harze eine besonders gute Mineralölverträglichkeit aufweisen. Es wurde bereits vorgeschlagen, solche Harze durch Umsetzung von Naturharzsäuren mit Kohlenwasserstoffharzen und Phenol-Aldehyd-Kondensationsprodukten herzustellen (DE-PS 24 06 555). Diese Harze haben jedoch den Nachteil, daß die hierfür geeigneten Kohlenwasserstoffharze spezielle Polymerisate darstellen, die die petrochemische Industrie aus speziellen Raffinationsschnitten gewinnen muß, und die daher nur begrenzt verfügbar sein können. Dies ist für den Weiterverarbeiter, der eine sichere Produktionsbasis anstreben muß, ungünstig.

Diese Kohlenwasserstoffharze werden außerdem in fester Form angeboten. Bekanntlich sind aber Feststoffe im Vergleich zu Flüssigkeiten umständlich handhabbar. Beim Befüllen von Produktionsanlagen entstehen Harzstäube; es bedarf dann aufwendiger Absaugungen, um diese toxikologisch nicht unbedenklichen Substanzen sicher handhaben zu können. Flüssigkeiten dagegen gestatten ein einfacheres Arbeiten, da sie beim Abfüllen und beim Beschicken von Kesselanlagen durch geschlossene Leitungssysteme transportiert werden können.

Bekannt sind auch Umsetzungsprodukte von Naturharzsäuren mit flüssigen Cyclopentadien-Verbindungen. Es wurde auch vorgeschlagen, diese Copolymerisate mit ethylenisch-ungesättigten Verbindungen, wie z.B. Maleinsäureanhydrid oder Styrol und Maleinsäureanhydrid und dann gegebenenfalls mit Phenol-Aldehyd-Kondensationsprodukten umzusetzen. Aufgrund der zusätzlichen Einführung polarer Gruppen werden damit im allgemeinen die erforderlichen guten Verträglichkeiten mit den unpolaren aliphatischen Mineralölen aber nicht mehr erreicht. Zusätzlich weisen solche Harze nur eine begrenzte Verträglichkeit mit vegetabilen Olen auf, die gleichfalls Bestandteile von Offsetdruckfarben sein können. Beispielsweise beschreibt die US Patentschrift 4 976 783 die Reaktion von Dicyclopentadien mit Maleinsäureanhydrid, Styrol, Kolophonium und Resol. Diese Produkte sind relativ arm an Phenolharzen, da letzteres nur zu höchstens 30 Gew.-% im Copolymerisat vorhanden ist.

Ziel der Erfindung war es daher, ein verbessertes Verfahren zur Herstellung von Harzen, die Cyclopentadien-Einheiten aufweisen und die ausgezeichnete Verträglichkeiten mit aromatenarmen Mineralölen und vegetabilen Ölen aufweisen, für Farben für den Offsetdruck auf Basis besser verfügbarer Rohstoffe zu entwickeln, die sich zudem noch einfacher verarbeiten lassen.

Dieses Ziel konnte erfindungsgemäß erreicht werden, indem man, ausgehend von den in US 4 976 783 beschriebenen Harzen, auf die Einpolymerisation von Maleinsäure und Styrol verzichtet und statt dessen den Anteil des Phenolharzes erhöht.

Gegenstand der Erfindung sind modifizierte Cyclopentadienharze, erhältlich durch Umsetzung von im wesentlichen
a) 20 bis 80 Gew.-% Cyclopentadienverbindungen, ausgewählt aus der Gruppe Cyclopentadien, Di-, Tri- und Tetramere des Cyclopentadiens, Alkylderivate des mono-, di-, tri- und tetrameren Cyclopentadiens, Cyclopentadien-Isopren-Dimere, Cyclopentadien-Piperylen-Dimere,
b) 1 bis 40 Gew.-% Naturharzsäuren,
c) 31 bis 70 Gew.-% Phenolharzen und gegebenenfalls
d) ungesättigten Verbindungen, ausgewählt aus der Gruppe Propylen, Buten, Butadien, Penten, Cyclopenten, Cyclohexen, Styrol, alpha-Methylstyrol, Vinyltoluol, Inden und Methylinden.

Die erfindungsgemäßen Harze sind Reaktionsprodukte von vorzugsweise 25 bis 60, insbesondere 30 bis 50 Gew.-% an Cyclopentadienverbindungen, 5 bis 30, insbesondere 10 bis 20 Gew.-% an Naturharzsäuren und 35 bis 60, insbesondere 40 bis 55 Gew.-% an Phenolharzen.

Die Herstellung dieser modifizierten Cyclopentadienharze kann in einer Eintopf-Reaktion erfolgen, indem die Komponenten a), b) und gegebenenfalls d) gleichzeitig miteinander umgesetzt werden. Bevorzugt setzt man jedoch zunächst die Komponenten a), b) und gegebenenfalls d) miteinander um und läßt dieses Reaktionsprodukt dann mit der Komponente c) reagieren.

Unter Cyclopentadienverbindungen a) die Flüssigkeiten darstellen, sind Cyclopentadien, dessen Oligomere, wie Di-, durch Diels-Alder-Addition erhältliche Tri- und Tetramere sowie die Alkylderivate oder Cooligomere dieser Verbindungen, z.B. Methylcyclopentadien, Cyclopentadien-Isopren-Dimere, Cyclopentadien-Piperylen-Dimere zu verstehen. Die betreffenden Ausgangssubstanzen brauchen keinen hohen Reinheitsgrad aufzuweisen. Es können beispielsweise Fraktionen, insbesondere konzentrierte Fraktionen, verwendet werden, die beim thermischen Dimerisieren einer C5-Fraktion entstehen, wobei diese C5-Fraktion als Nebenprodukt bei der thermischen Zersetzung von Naphtha und entsprechenden Erdölfraktionen anfällt. Bei einer solchen Dimerisierung wird das in einer solchen Fraktion enthaltene Cyclopentadien bzw. Methylcyclopentadien in Dicyclopentadien, Dimethyldicyclopentadien, ein Dimeres aus Cyclopentadien und Methylcyclopentadien, ein Dimeres aus Cyclopentadien und Isopren, ein Dimeres aus Cyclopentadien-Piperylen und andere entsprechende dimere Substanzen umgewandelt.

In diesen Fraktionen können noch weitere ungesättigte Monomere, wie z.B. Propylen, Buten, Butadien, Penten, Cyclopenten oder Cyclohexen enthalten sein.

Auch können sogenannte C9-Fraktionen, die als Nebenprodukt bei der Crakkung von Naphtha und dgl. entstehen, enthalten sein. Diese bestehen dann beispielsweise aus Styrol, alpha-Methylstyrol, Vinyltoluol, Inden, Methylinden oder Mischungen davon.

Demzufolge ist eine höhere Reinheit der Komponente a) nicht immer erforderlich, es ist jedoch bevorzugt, daß Cyclopentadieneinheiten in einer Menge von 70 Gew.-% oder mehr vorliegen.

Geeignete Naturharzsäuren b) sind beispielsweise Kolophonium, Tallharzsäure, Wurzelharz, polymerisiertes, disproportioniertes oder hydriertes Kolophonium. Mit diesen Harzen läßt sich z.B. die Viskosität der erfindungsgemäßen Umsetzungsprodukte steuern. Die Naturharze können als solche oder in Form ihrer Ester bzw. Resinate verwendet werden. Diese können z.B. durch mindestens teilweise Veresterung mit ein- und/oder mehrwertigen Alkoholen mit bis zu 12 C-Atomen, wie Methanol, Ethanol, Propanol, den Butanolen, Pentanolen, Hexanolen, Heptanolen, Octanolen, Nonanolen, Dodecanolen, Diolen mit 2 bis 8 C-Atomen, wie Ethandiol, den Propandiolen, Butan-, Pentan-, Hexandiolen, Glycerin, Trimethylolpropan, Pentaerythrit und/oder durch mindestens teilweise Neutralisation mit Verbindungen von Metallen der II. und/oder III. Gruppe des Periodischen Systems, z.B. Oxiden, Hydroxiden, Carbonaten oder Acetaten von Zink, Calcium und/oder Magnesium unter Salzbildung hergestellt werden. Andererseits können auch die sauren Gruppen der Naturharze nachträglich in an sich bekannter Weise unter Resinat- und/oder Esterbildung umgesetzt werden, jedoch ist die zuerst genannte Möglichkeit bevorzugt.

Die Copolymerisation von a) mit b), die radikalisch oder vorzugsweise thermisch durchgeführt wird, kann in Substanz, aber auch in Gegenwart von inerten Lösungsmitteln durchgeführt werden.

Es eignen sich hierzu beispielsweise aromatische Kohlenwasserstoffe, wie Benzol, Toluol, Xylole und Tetrahydronaphthalin, aliphatische Kohlenwasserstoffe, wie Isooctan, Testbenzin sowie Gemische aus alkylierten Benzolen mit einem Siedebereich von 100 bis 200 °C. Geeignete Katalysatoren für die radikalische Polymerisation, die weniger bevorzugt ist, sind z.B. Peroxide, wie Di-t-butylperoxid, Benzoylperoxid, tert.-Butyl-hydroperoxid, Cumolhydroperoxid oder dergleichen. Wegen der hohen Reaktionstemperatur wird das Verfahren vorzugsweise unter erhöhtem Druck durchgeführt. Dieser beträgt vorzugsweise bis zu 10 bar. Wegen der Oxidationsempfindlichkeit der Reaktionsprodukte ist es außerdem von Vorteil, in der Atmosphäre eines unter den Reaktionsbedingungen inerten Gases, wie Stickstoff oder Kohlendioxyd zu arbeiten.

Das erfindungsgemäße Verfahren läßt sich in unterschiedlicher Weise durchführen. Bei kleineren Ansätzen ist es möglich, die Komponenten a) und b) gemeinsam vorzulegen und anschließend auf die gewünschte Temperatur zu erhitzen. Bei größeren Ansätzen empfiehlt es sich jedoch wegen der auftretenden Reaktionswärme, die Naturharzsäure b) vorzulegen, auf Reaktionstemperatur zu erhitzen und anschließend die Cyclopentadienverbindungen a) zuzudosieren. Es ist jedoch auch möglich, zunächst das Lösungsmittel zu erhitzen und dann die Komponente b), die zweckmäßigerweise in Lösung vorliegt, und die Komponente a) zuzudosieren. Die Reaktionstemperatur für die Reaktion der Komponenten a) und b) beträgt 200 bis 300, vorzugsweise 230 bis 270 °C. Nach Reaktionsende können die erhaltenen Copolymerisate gegebenenfalls durch Abdestillieren von Lösungsmitteln und nicht umgesetzten Monomeren als Feststoffe isoliert werden. Ihr Erweichungspunkt liegt im allgemeinen zwischen 40 und 200 °C. Einfacher ist es jedoch, die durch Umsetzung von a) mit b) erhaltenen Copolymerisate ohne vorherige Isolierung mit den Phenol-Aldehyd-Kondensationsprodukten c) umzusetzen. Diese Ausführungsform ist deshalb bevorzugt.

Geeignete Phenolharze als Komponente c) sind Novolake oder Resole, wie solche aus Phenol, das zweckmäßig jedoch nur in geringerem Anteil vorliegt, aus durch Kohlenwasserstoffreste substituierten Phenolen, wie Alkyl-, z.B. solche mit 1 bis 12 C-Atomen im Alkylrest, Aryl- oder Aralkylphenolen, z.B. Kresolen, wie m-Kresol, 1.3.5.-Xylenolen, Isopropyl-, p-tert.-Butyl-, Amyl-, Octyl- oder Nonylphenol, Phenylphenol, Cumylphenol, ferner aus Diphenylolpropan. Geeignete Aryl- oder Aralkylphenole oder durch andere carbocyclische Gruppen substituierte Phenole sind solche, wie sie durch Anlagerung von ungesättigten Monomeren, wie Stryol, alpha-Methylstyrol, alpha-Chlorstyrol, Vinyltoluol, Cyclopentadien oder dergleichen an Phenole in bekannter Weise unter Verwendung saurer Katalysatoren erhalten werden. Durch den überwiegenden Anteil an Alkyl- oder Aralkylphenolen lassen sich gewünschte Veträglichkeiten der Reaktionsprodukte mit aliphatischen Kohlenwasserstoffen erzielen. Die Harze aus mindestens trifunktionellen Phenolen, das sind solche Phenole, in denen drei o- und/oder p-Stellungen zu wenigstens einer phenolischen OH-Gruppe frei und reaktiv sind, sind nicht bevorzugt, sondern solche aus bifunktionellen Phenolen. Die vorstehend erwähnten mindestens trifunktionellen Phenole bzw. die entsprechenden Phenolharze werden im allgemeinen nur zusammen mit bifunktionellen phenolischen Bestandteilen, z.B. den genannten Alkylphenolen und/oder den Anlagerungsprodukten der Phenole mit ungesättigten Monomeren eingesetzt. Hierbei können die mindestens trifunktionellen Phenole, z.B. Phenol oder Diphenylolpropan, in einem Anteil von vorzugsweise bis zu 10 Gew.-%, bezogen auf die Gesamtmenge an Phenolen, mitverwendet werden. Durch die Dosierung der trifunktionellen Phenole läßt sich die Löslichkeit der Endprodukte, insbesondere in aliphatischen Kohlenwasserstoffen, steuern. Andererseits kann durch höheren Gehalt an trifunktionellen Phenolen die Löslichkeit der Produkte in aromatischen Kohlenwasserstoffen erhöht werden.

Als Aldehyd-Komponenten der Phenolharze seien z.B. Aldehyde mit 1 bis 7 C-Atomen, insbesondere Formaldehyd in verschiedenen monomeren und polymeren Formen, aber auch andere Aldehyde, wie Acetaldehyd, Butyraldehyd, Isobutyraldehyd, Benzaldehyd oder Furfurol genannt. Das Molverhältnis Phenol zu Aldehyd, z.B. auch kondensiertem Aldehyd, kann in weiten Grenzen schwanken, z.B. mindestens 1 : 0,9 und höchstens 1 : 3,5, vorzugsweise 1 : (1 bis 2,5), wobei etwa nicht verbrauchter Aldehyd abdestilliert werden kann. Durch die Natur und Menge der Phenolharzkomponenten im Ausgangsgemisch läßt sich die Viskosität der Endprodukte auf bequeme Weise steuern. Die Phenolharze lassen sich auch in Form von Mischkondensaten aus verschiedenen Phenolen verwenden. Andererseits können sie gegebenenfalls auch in Form von Addukten umgesetzt werden, die durch Addition von ungesättigten Monomeren, z.B. den obengenannten, an die Resole erhalten wurden. Falls Phenolharze auf Basis von Alkylphenolen bzw. deren Komponenten umgesetzt werden, kann es zweckmäßig sein, Gemische von Alkylphenolen, die mindestens 25, vorzugsweise mindestens 50 Gew.-% Nonylphenol enthalten, umzusetzen. Diese Ausführungsform hat den Vorteil, daß Produkte mit besonders guter Mineralölverträglichkeit hergestellt werden können.

Die Umsetzung der Phenolharze c) mit den aus a) und b) gebildeten Copolymerisaten wird so durchgeführt, daß die Phenol-Aldehyd-Kondensationsprodukte bei der gewünschten Temperatur der Copolymerisat-Schmelze oder auch der Lösung zudosiert werden, wobei das entstehende Reaktionswasser abdestilliert wird. Die Reaktionstemperatur beträgt hier im allgemeinen 100 bis 270, vorzugsweise 120 bis 260 °C.

Hierbei ist es nicht unbedingt erforderlich, einen Katalysator zu verwenden, doch arbeitet man in der Regel in Gegenwart eines alkalischen Katalysators, z.B. Natrium-, Kalium-, Magnesium-, Calcium-, Barium- und/oder Zinkhydroxid, sowie Oxiden, Carbonaten und/oder Acetaten davon, z.B. von Zink, Magnesium, Calcium; das heißt es sind alle aus der Phenolharztechnologie bekannten basischen Kondensationsmittel geeignet, jeweils für sich allein oder im Gemisch.

Deren Anteil beträgt im allgemeinen bis zu einem Grammequivalent pro Mol Phenol, insbesondere 0,1 bis 4,5, vorzugsweise 0,2 bis 4 Gew.-%, bezogen auf die phenolischen Anteile.

Gerade bei der Umsetzung mit den Phenol-Aldehyd-Kondensationsprodukten hat die Einführung von Carboxylgruppen durch die Naturharzsäuren den Vorteil, während des Reaktionsablaufs in der Wärme die Katalysatorenanteile der Phenolharze in löslicher Form, z.B. als Resinate, zu binden. Damit wird verhindert, daß salzartige unlösliche Anteile in den Endprodukten verbleiben. Diese Katalysatorenanteile würden im Produkt sehr störend wirken und müßten daher auf irgendeine Weise, z.B. durch Auswaschen, entfernt werden. Die Umwandlung der Katalysatorenanteile durch die Naturharzsäuren ist deshalb besonders vorteilhaft, wenn erfindungsgemäß Phenolresole mit bis zu 4,5 Gew.-% Katalysator, bezogen auf das Gewicht des Phenols, die nicht neutralisiert und deren Katalysator nicht ausgewaschen sind, zur Modifizierung eingesetzt werden. So läßt sich durch die Umsetzung mit Naturharzsäuren ein Auswaschen vermeiden, und dadurch unterbleibt eine umweltschädliche Abwasserbelastung.

Es ist auch möglich, katalysatorfreie Phenolharze für die Modifizierung einzusetzen und die Naturharzsäure-Anteile gegebenenfalls zu verestern bzw. zu neutralisieren. Man kann aber auch beispielsweise Katalysatoren enthaltende Resole und gleichzeitig Alkohole als Veresterungsmittel von Anfang an mitverwenden oder zu einem späteren Zeitpunkt Resinat- und/oder Estergruppen erzeugen. Man kann aber auch gegebenenfalls durch Zusätze an Metallverbindungen nur Resinate herstellen.

Die Veresterung bzw. Salzbildung kann zuweilen dann vorteilhaft sein, wenn die Polarität der erfindungsgemäßen Harze und die Pigmentbenetzungsfähigkeit noch mehr gesteigert werden sollen. Dies ist besonders für den Einsatz als Dispergierharz bzw. als Flushharz wichtig.

Geeignete Veresterungsmittel sind beispielsweise Methanol, Ethanol, Propanol, n-Butanol, sekundäres und tertiäres Butanol, Isobutanol, Allylalkohol, Ethylhexylalkohol, Nonylalkohol, Dodecylalkohol, Cyclohexanol, Benzylalkohol, Oleylalkohol, ferner Ethylenglykol, Diethylalkohol, Glycerin, Pentaerythrit, Neopentylglykol. Durch die monofunktionellen aliphatischen Alkohole mit mehr als 5 Kohlenstoffatomen kann man gleichzeitig die Schmelzviskosität der Harze herabsetzen. Wird mit polyfunktionellen Alkoholen verestert, so wird die Lösungsviskosität der Harze angehoben. Die Menge des Alkohols hängt von der gewünschten Viskosität ab. Sie kann bis zu 10 Mol.-% pro Carboxylgruppe bei den mehrwertigen Alkoholen und bis zu 100 Mol.-% pro Carboxylgruppe bei den einwertigen Alkoholen betragen. Zu hohe Anteile führen zur Gelbildung.

Die nachträgliche Veresterung wird im allgemeinen so durchgeführt, daß man die Alkohole entweder in der Schmelze oder in einem der vorstehend beschriebenen Lösungsmittel mit den erfindungsgemäßen Kohlenwasserstoffharzen umsetzt. Bei Veresterungstemperaturen von über 220 °C, wie sie insbesondere bei hochschmelzenden Bindemitteln für Druckfarben erforderlich sind, bewähren sich die guten thermischen Beständigkeiten der Produkte. Die Veresterung kann vollständig erfolgen, ohne daß gleichzeitig unerwünschte thermische Aufbaureaktionen z.B. durch Polymerisation, die zu weniger gut verträglichen Harzen führen, in größerem Maße stattfinden.

Neben den Salzbildnern der II. oder III. Gruppe des Periodischen Systems kann die Salzbildung ganz oder teilweise auch mit solchen der I. Gruppe erfolgen. Beispiele sind die Acetate, Formiate, vorzugsweise jedoch Hydroxide und Alkoholate, jeweils einzeln oder im Gemisch, z.B. von Lithium, Natrium und Kalium. Es ist aber auch möglich, die Säuregruppe mit Ammoniak, mono- und mehrfunktionellen Aminen oder Kombinationen davon ganz oder teilweise umzusetzen. Als Amine kommen aliphatische, aromatische und cycloaliphatische Stickstoffverbindungen, z.B. gegebenenfalls durch mindestens eine Alkylgruppe substituierte primäre oder sekundäre Amine, ferner Polyamine, wie Ethylendiamin, Diethylentriamin, Triethylentetramin oder dergleichen, aber auch quartäre Ammoniumbasen infrage. Der aliphatische Rest dieser Verbindungen kann auch Sauerstoff in etherartiger Bindung enthalten. Im Falle eines cycloaliphatischen Amins kann das Stickstoffatom außerhalb des Ringes, aber auch im Ring selbst eingebaut sein. Morpholin ist das Beispiel eines cycloaliphatischen Amins, in dem der Sauerstoff und der Aminstickstoff im cycloaliphatischen Ring liegt. 3-Aminopropyl-imidazol ist das Beispiel einer aromatischen Stickstoffverbindung mit zwei Stickstoffatomen im Ring, von denen eines einen Aminoalkyl-Substituenten trägt. Zweckmäßig können bis zu 30, vorzugsweise 5 bis 15 Mol.-% der Carboxylgruppen durch Umsetzung mit Ammoniak oder Aminen oder Salzbildung modifiziert werden.

Der Fortgang der Reaktion zu den erfindungsgemäßen Harzen wird durch Bestimmung charakteristischer Kennzahlen, wie z.B. Säurezahl oder Viskosität in einem geeigneten Lösungsmittel, überprüft. Sobald die gewünschten Werte erreicht sind, wird die Reaktion durch Abkühlen auf Raumtemperatur abgebrochen. Befinden sich Lösungsmittel im Reaktionsgemisch, so werden diese zweckmäßigerweise vorher, z.B. durch Verflüchtigen, wie durch Destillation, entfernt. In manchen Fällen kann es jedoch erwünscht sein, die Lösungsmittel, insbesondere aliphatenreiche Mineralöle - z.B. mit einem Siedebereich von 240 bis 320 °C - zumindest teilweise in den Produkten zu belassen, um je nach Wunsch Schmelzpunkt und Viskosität des Harzes zu variieren. Hierbei sind alle Möglichkeiten vom festen über einen flüssigen Harz-Mineralöl-Firnis bis zur Lösung gegeben.

Andererseits besteht auch die Möglichkeit, erfindungsgemäß erhaltene, besonders hochschmelzende Produkte der Erfindung nach der Reaktion z.B. mit aliphatenreichen Mineralölen zu verdünnen und dadurch eine Schmelzpunkts- und Viskositätserniedrigung zu erhalten.

Die erfindungsgemäß hergestellten Produkte sind sehr gut verträgliche Harze. Zur Emittlung der Mineralölverträglichkeit bzw. der Klarlöslichkeit in Mineralöl werden diese jeweils bei 180 °C zu 50 gew.-%igen Lösungen gelöst, die Lösungen auf 23 °C abgekühlt und sogleich unter Rühren bis zum Auftreten einer Trübung (Trübungspunkt) mit dem gleichen Mineralöl titriert. Das am Trübungspunkt in der Lösung vorliegende Verhältnis von 1 Gew.-Teil Harz zu x Gew.-teilen Mineralöl wird als Verträglichkeit bezeichnet. Analog wird die Verträglichkeit in Leinöl bestimmt. Die erfindungsgemäßen Harze sind mit standardisiertem aromatenhaltigem Mineralöl (Siedebereich 240 bis 270 °C, Anilinpunkt 72 °C) zumindest im Verhältnis 1 : 5, vorzugsweise mindestens 1 : 10, mit standardisiertem aromatenfreiem Mineralöl (Siedebereich 240 bis 270 °C, Anilinpunkt 92 °C) mindestens im Verhältnis 1 : 1 verträglich. Sie geben aber auch die Bestandteile dieser Lösungsmittel wieder rasch ab. Mit Leinöl sind die erfindungsgemäßen Produkte zumindest im Verhältnis 1 : 5, vorzugsweise mindestens jedoch 1 : 10 verträglich.

Die erfindungsgemäßen Produkte stellen hochschmelzende Verbindungen dar. Sie haben einen Schmelzbereich von 120 bis 225, vorzugsweise 135 bis 200 °C.

Die Viskosität der Produkte (in 50 %iger Toluollösung/23 °C) beträgt im allgemeinen 50 bis 600 mPa.s. Die Schmelzpunkte und Viskositäten können gegebenenfalls auch ober- oder unterhalb der angegebenen Bereiche liegen, doch sind die vorstehenden Bereiche wegen der Brauchbarkeit der Produkte als Druckfarbenbindemittelharze besonders interessant. Besonders günstig verhalten sich auch Produkte mit einer Säurezahl von 10 bis 30, vorzugsweise 10 bis 20 mg KOH/g Harz.

Die Molekulargewichte der erfindungsgemäßen Harze können durch Gelpermeationschromatographie der Harzlösungen in Tetrahydrofuran an Polystyrolschaum in einem Permeationsmeßgerät nach bekannten Methoden ermittelt werden. Das Molekulargewicht (Gewichtsmittel M_{w}) der erfindungsgemäßen Harze liegt gemäß den erhaltenen Meßwerten vorzugsweise bei Werten von M_{w} > 3000 und ist nach oben nicht kritisch begrenzt. Besonders bevorzugt liegen die Molekulargewichte M_{w} jedoch in einem mittleren Bereich zwischen 4000 und 50000, insbesondere 5000 bis 30000.

Lösungen der Produkte in aliphatischen Mineralölen lassen sich als Firnisse für Überzüge, insbesondere Anstrichmittel und Druckfarben, verwenden. Für diesen Zweck lassen sie sich gut mit Alkydharzen, Sikkativen, wie Naphthenaten oder Octoaten von Kobalt, Zink, Mangan, Blei oder dergleichen und Pigmenten, ferner mit - im allgemeinen bis 1 Gew.-% - chelatbildenden Metallverbindungen, wie Titanaten oder Aluminiumalkoholaten, zu Druckfarbenbindemitteln für den Bogen- und Rollenoffsetdruck verarbeiten. Die Chelatbildner können eine gewisse Gelbildung in erwünschtem Ausmaß erleichtern und damit auch zu einer rascheren Trocknung und einem besseren Stand auf dem Papier beitragen.

Die nachstehenden Beispiele dienen zur Erläuterung der Erfindung.

### Beispiel 1

### Herstellung aus Copolymerisat und Resol

In einer 3 ltr.-Druckapparatur werden 300 g Kolophonium auf 260 °C erhitzt. Dazu werden innerhalb 2 h 700 g Dicyclopentadien mit einem Gehalt von 75 % Cyclopentadien-Einheiten zudosiert und weitere 5 h unter Rühren bei dieser Temperatur gehalten; dabei bildet sich der zunächst auf 9 bar gestiegene Druck auf 5 bar zurück. Dann läßt man die Schmelze auf 160 °C abkühlen. In diese abgekühlte Schmelze werden 710 g eines wasserlöslichen Resols aus 1860 g Nonylphenol und 510 g Formaldehyd (Verarbeitungsviskosität 250 mPa.s, Trockenrückstand 68 % nach einstündigem Erhitzen auf 135 °C) zudosiert. Unter ständiger Wasserentfernung wird das Gemisch auf 250 °C und dann, bei Erreichen einer Viskosität von 100 mPa.s einer 50 %igen toluolischen Lösung bei 23 °C, bis herab zu 50 mbar unter Abdestillieren der flüchtigen Anteile erhitzt. Ausbeute 1402 g, Schmelzpunkt 145 °C, Säurezahl 11 mg KOH/g, Viskosität einer 40 %igen Lösung in Leinöl 350 dPa.s/23 °C, Verträglichkeit mit einem aromatenarmen Mineralöl des Siedebereichs 240-270 °C und des Anilinpunkts 72 °C besser als 1 : 20, mit einem aromatenfreien Mineralöl des Siedebereichs 240-270 °C und des Anilinpunkts 92 °C 1 : 2. Die Verträglichkeit mit Leinöl ist bei 23 °C unbegrenzt. Das Gewichstmittel M_{w} beträgt 7550.

### Beispiel 2

### Herstellung aus Copolymerisat und styrolisiertem Resol

In einer 3 ltr.-Druckapparatur werden 333 g Kolophonium auf 260 °C erhitzt. Dazu werden innerhalb 2 h 666 g Dicyclopentadien mit einem Gehalt von 75 % Cyclopentadien-Einheiten zudosiert und weitere 5 h unter Rühren bei dieser Temperatur gehalten; dabei bildet sich der zunächst auf 9 bar gestiegene Druck auf 5 bar zurück. Dann läßt man die Schmelze auf 160 °C abkühlen. In diese abgekühlte Schmelze werden 605 g eines mit Styrol modifizierten Resols aus 1800 g p-t-Butylphenol, 737 g Formaldehyd und 150 g Styrol eingetragen. Unter ständiger Wasserentfernung wird das Gemisch auf 250 °C und dann, bei Erreichen einer Viskosität von 100 mPa.s einer 50 %igen toluolischen Lösung bei 23 °C, bis herab zu 50 mbar unter Abdestillieren der flüchtigen Anteile erhitzt. Ausbeute 1390 g, Schmelzpunkt 164 °C, Säurezahl 18 mg KOH/g, Viskosität einer 40 %igen Lösung in Leinöl 580 dPa.s/23 °C, Verträglichkeit mit einem aromatenfreien Mineralöl des Siedebereichs 240-270 °C und des Anilinpunkts 92 °C 1 : 1. Die Verträglichkeit mit Leinöl ist unbegrenzt.

### Beispiel 3

### Herstellung aus Copolymerisat und einem gemischten Resol

In einer 3 ltr.-Druckapparatur werden 300 g Kolophonium und 700 g 78 %iges Dicyclopentadien auf 260 °C erhitzt. Nach fünf Stunden wird auf 160 °C abgekühlt und die Apparatur drucklos gestellt. Eine aus der Schmelze entnommene Probe erstarrt zwischen 125 und 130 °C.

Dann werden in die Schmelze 800 g eines aus 650 g Nonylphenol, 44 g Diphenylolpropan und 216 g Paraformaldehyd hergestellten wasserlöslichen Resols eingetragen. Dann wird auf 250 °C erhitzt und die flüchtigen Anteile abdestilliert, zuletzt im Vakuum bei 50mbar. Es werden 1506 g Offsetdruckfarbenharz vom Schmelzpunkt 143-153 °C erhalten. Es hat eine Säurezahl von 13 mg KOH/g, 40 %ig in einem Mineralöl vom Siedepunkt 240 - 270 °C und einem Anilinpunkt von 72 °C eine Viskosität von 70 dPa.s und löst sich in einem aromatenfreien Mineralöl vom Siedepunkt 240-270 °C und dem Anilinpunkt 92 °C im Verhältnis 1 : 1,1 blank. Das Gewichtsmittel M_{w} beträgt 22450.

### Beispiel 4

### Herstellung aus Copolymerisat und zwei verschiedenen Resolen

In einem 20 ltr.-Autoklaven werden 1500 g Kolophonium unter Stickstoff auf 250 °C erhitzt, wobei sich ein Druck von 2,5 bar einstellt. Dazu werden innerhalb 45 min 3500 g Dicyclopentadien (75-80 %ig) zudosiert. Nach dem Zudosieren beträgt der Druck 9 bar. Dann wird noch 5 h bei 250 °C gehalten, wobei der Druck bis 5 bar absinkt und die Apparatur entspannt. In die auf 160 °C abgekühlte Schmelze werden innerhalb 3 h ein Gemisch aus 1500 g Xylol, 3000 g eines aus 3720 g Nonylphenol und 2760 g 37 %igen Formaldehyd hergestellten Resols (Verarbeitungsviskosität 200-300 mPa.s, Trockenrückstand 1 h/135 °C 68%) und 1000 g eines aus 1305 g p-t-Butylphenol, 245 g 37 %igen und 484 g 91 %igen Formaldehyd hergestellten Resols (Verarbeitungsviskosität 340-370 mPa.s) zugetropft, wobei das entstehende Wasser azeotrop abdestilliert wird. Dann wird das Gemisch auf 260 °C erhitzt, wobei weitere flüchtige Bestandteile abdestillieren..Bei Erreichen einer Viskosität von 220 mPa.s einer 50 %igen toluolischen Lösung wird die Reaktion beendet. Es werden 7080 g Festharz vom Fp. 155 °C und einer Säurezahl von 19 mg KOH/g erhalten. Es besitzt in einem aromatenarmen Mineralöl des Siedebereichs 240-270 °C und dem Anilinpunkt 72 °C, 40 %ig gelöst, eine Viskosität von 65 dPa.s. Seine Verträglichkeit in einem aromatenfreien Mineralöl vom Siedepunkt 240-270 °C und dem Anilinpunkt 92 °C beträgt 1 : 2.

### Beispiel 5

### Herstellung eines Dispergierfirnis

In einer 5 ltr.-Druckapparatur werden 300 g Kolophonium und 700 g 75 %iges Dicyclopentadien auf 260 °C erhitzt. Nach fünf Stunden wird die gerührte Schmelze auf 160 °C abgekühlt und die Apparatur drucklos gestellt. In diese Schmelze werden 710 g eines wasserlöslichen Resols aus 1860 g Nonylphenol und 510 g Formaldehyd (Verarbeitungsviskosität 250 mPa.s, Trockenrückstand 68 % nach einstündigem Erhitzen auf 135 °C) zudosiert. Unter ständiger Wasserentfernung wird das Gemisch auf 250 °C erhitzt, bis eine Viskosität von 100 mPa.s/23 °C einer 50 %igen toluolischen Lösung erreicht ist. Dann fügt man 12,5 g 3-Aminopropyl-imidazol hinzu, rührt noch 1 Stunde nach und destilliert flüchtige Bestandteile im Vakuum bei 50 mbar ab. Dann läßt man 2100 g eines Mineralöls vom Siedepunkt 240-270 °C und dem Anilinpunkt 72 °C zulaufen. Nach dem Abkühlen weist der Firnis eine Viskosität von 10 dPa.s/23 °C auf. Er kann zum Flushen wasserfeuchter Pigmentpreßkuchen bzw. zum Dispergieren von Pigmenten verwendet werden.

### Beispiel 6

### Vom Produkt des Beispiels 1 wurde nach der folgenden Rezeptur eine Druckfarbe für den Bogenoffsetdruck hergestellt und anwendungstechnisch geprüft.

Es wird ein Einsatzfirnis hergestellt, der 35 Gew.-% des Druckfarbenharzes, 13 Gew.-% eines handelsüblichen Alkydharzes (Viskosität 200 dPa.s, Öllänge 76 %), 19 Gew.-% Leinöl und 33 Gew.-% hochsiedendes Mineralöl mit dem Siedebereich 280 bis 310 °C enthält.

Daraus wird mit Litholrubin L6B durch Dispergieren auf dem Dreiwalzenstuhl eine Druckfarbenpaste hergestellt, die 32 Gew.-% Pigment und 68 Gew.-% Firnis enthält.

Durch Verdünnen mit Einsatzfirnis und Mineralöl wird daraus unter Zugabe von Mangannaphthenat als Sikkativ auf der Tellerreibmaschine eine druckfertige Farbe hergestellt, die aus 50 Gew.-% der Paste, 41 Gew.-% des Einsatzfirnis, 7,5 Gew.-% Mineralöl vom Siedebereich 280 bis 310 °C und 1 Gew.-% Sikkativ besteht.

Diese wurde auf dem Probedruckgerät der Fa. Prüfbau auf Kunstdruckpapier APCO II/II angedruckt und Probedrucke in Abhängigkeit der übertragenen Farbmenge ausgewertet. Bestimmt wurden die Zügigkeit der Farbe, Glanz und Farbdichte der Druckfilme sowie deren Wegschlagverhalten. Die Ergebnisse der Prüfungen dieser Druckfarbe sind der Tabelle zu entnehmen. Darin bedeuten:
Zügigkeit (Maß für die Farbübertragung) gemessen mit dem Inkomat der Fa. Prüfbau
Glanz, Farbdichte gemessen mit dem Laborreflektometer nach Lange Einstrahlwinkel 60 °
Wegschlagen (Maß für die Trocknung) die Beurteilung erfolgt mit Hilfe des Probedruckgerätes, wobei unmittelbar nach dem Andruck dieser mit unbedrucktem Papier gekontert wird. Je weniger Farbe durch die Konterung übertragen wird, desto besser ist die Trocknung. Die Auswertung erfolgt visuell, wobei die Note 1 ein sehr gutes Verhalten, die Note 6 ein sehr schlechtes Verhalten bedeutet.

| | | | |
|---|---|---|---|
| Viskosität Einsatzfirnis [Pa.s/23°C, Schergefälle 50 s⁻¹] | 30 | | |
| Viskosität Druckfarbe [Pa.s/23°C, Schergefälle 50 s⁻¹] | 43 | | |
| Zügigkeit der Druckfarbe bei 200 m/s und 23°C | 10,3 | | |
| übertragene Farbmenge [mg/80 cm²] | 10,2 | 11,8 | 15,4 |
| Glanz [%] | 64,4 | 78,6 | 79,8 |
| Farbdichte | 1,58 | 1,76 | 1,91 |
| Wegschlagen [Note 1 bis 6] | 3,0 | 3,3 | 3,5 |

### Beispiel 7

Vom Produkt des Beispiels 1 wurde nach der folgenden Rezeptur eine Druckfarbe für den Rollenoffsetdruck hergestellt und anwendungstechnisch geprüft.

Es wird ein Einsatzfirnis hergestellt, der 38 Gew.-% des Druckfarbenharzes, 10 Gew.-% eines handelsüblichen Alkydharzes (Viskosität 200 dPa.s, Öllänge 76 %) und 52 Gew.-% hochsiedendes Mineralöl mit dem Siedebereich 240 bis 270 °C enthält.

Daraus wird mit Litholrubin L6B durch Dispergieren auf dem Dreiwalzenstuhl eine Druckfarbenpaste hergestellt, die 32 Gew.-% Pigment und 68 Gew.-% Firnis enthält.

Durch Verdünnen mit Einsatzfirnis und Mineralöl wird daraus unter Zugabe von Mangannaphthenat als Sikkativ auf der Tellerreibmaschine eine druckfertige Farbe hergestellt, die aus 50 Gew.-% der Paste, 43 Gew.-% des Einsatzfirnis, 6 Gew.-% Mineralöl vom Siedebereich 240 bis 270 °C und 1 Gew.-% Sikkativ besteht.

Diese wurde auf dem Probedruckgerät der Fa. Prüfbau auf Kunstdruckpapier APCO II/II angedruckt und Probedrucke in Abhängigkeit der übertragenen Farbmenge ausgewertet.

| | | | |
|---|---|---|---|
| Viskosität Einsatzfirnis [Pa.s/23°C, Schergefälle 50 s⁻¹] | 11 | | |
| Viskosität Druckfarbe [Pa.s/23°C, Schergefälle 50 s⁻¹] | 28 | | |
| Zügigkeit der Druckfarbe bei 200 m/s und 23°C | 10,3 | | |
| übertragene Farbmenge [mg/80 cm²] | 10,2 | 13,0 | 17,4 |
| Glanz [%] | 63,4 | 65,2 | 67,88 |
| Farbdichte | 1,71 | 1,84 | 1,94 |
| Wegschlagen [Note 1 bis 6] | 1,70 | 2,0 | 2,3 |

Nach der US-Patentschrift 4 976 783 wurden zwei Vergleichsbeispiele hergestellt. Diese weisen eine wesentlich schlechtere Verträglichkeit in aromatenfreien Mineralölen sowie in vegetabilen Ölen, wie z.B. Leinöl auf, was ihre Einsatzmöglichkeiten in Druckfarben für den Offsetdruck im Vergleich zu den erfindungsgemäßen Produkten stark einschränkt. Deshalb besitzen die letzteren überlegene Eigenschaften.

### Vergleichsbeispiel 1

Man stellt das in der US-Patentschrift angegebene Beispiel 3 (65 Gew.-% DCPD, 25 Gew.-% Tallharz, 5 Gew.-% tert.-Butyl-Phenolresol, 5 Gew.-% Styrol) her. Das Harz ist mit einem aromatenfreien Mineralöl des Siedebereichs 240 bis 270 °C und dem Anilinpunkt 92 °C, im Verhältnis 1 : 1 bei 180 °C gelöst, nach dem Abkühlen auf 23 °C unverträglich, d.h., das Harz fällt aus der Mischung wieder aus. Gleiches gilt in anaolger Weise für eine Verträglichkeitsprüfung mit Leinöl.

### Vergleichsbeispiel 2

Man stellt das in der US-Patentschrift angegebene Beispiel 7 (48 Gew.-% DCPD, 45 Gew.-% Kolophonium, 5 Gew.-% tert.-Butyl-Phenolresol, 2 Gew.-% MSA) her. Das Harz ist mit einem aromatenfreien Mineralöl des Siedebereichs 240 bis 270 °C und dem Anilinpunkt 92 °C, im Verhältnis 1 : 1 bei 180 °C gelöst, nach dem Abkühlen auf 23 °C unverträglich, d.h. das Harz fällt aus der Mischung wieder aus. Gleiches gilt in analoger Weise für eine Verträglichkeitsprüfung mit Leinöl.

## Patentansprüche

1. Modifizierte Cyclopentadienharze, erhältlich durch Umsetzung von im wesentlichen
a) 25 bis 80 Gew.-% Cyclopentadienverbindungen, ausgewählt aus der Gruppe Cyclopentadien, Di-, Tri- und Tetramere des Cyclopentadiens, Alkylderivate des mono-, di-, tri- und tetrameren Cyclopentadiens, Cyclopentadien-Isopren-Dimere, Cyclopentadien-Piperylen-Dimere,
b) 1 bis 40 Gew.-% Naturharzsäuren,
c) 31 bis 70 Gew.-% Phenolharzen und gegebenenfalls
d) ungesättigten Verbindungen, ausgewählt aus der Gruppe Propylen, Buten, Butadien, Penten, Cyclopenten, Cyclohexen, Styrol, alpha-Methylstyrol, Vinyltoluol, Inden und Methylinden.

2. Modifizierte Cyclopentadienharze nach Anspruch 1, dadurch gekennzeichnet, daß das Harz durch Umsetzung von
a) 25 bis 60 Gew.-% der Cyclopentadienverbindungen,
b) 5 bis 30 Gew.-% Naturharzsäuren und
c) 35 bis 60 Gew.-% Phenolharzen
erhältlich ist.

3. Modifizierte Cyclopentadienharze nach Anspruch 1, dadurch gekennzeichnet, daß das Harz durch Umsetzung aus
a) 30 bis 50 Gew.-% der Cyclopentadienverbindungen,
b) 10 bis 20 Gew.-% Naturharzsäuren und
c) 40 bis 55 Gew.-% Phenolharzen
erhältlich ist.

4. Verfahren zur Herstellung der Cyclopentadienharze nach Anspruch 1, dadurch gekennzeichnet, daß man zunächst die Komponenten a), b) und gegebenenfalls d) umsetzt und das erhaltene Reaktionsprodukt anschließend mit der Komponente c) umsetzt.

5. Verwendung der Cyclopentadienharze nach Anspruch 1 als Bindemittelharze für Druckfarben.

## Claims

1. Modified cyclopentadiene resins obtainable by reacting essentially
a) 20 to 80% by weight of cyclopentadiene compounds, selected from the group consisting of cyclopentadiene, di-, tri- and tetramers of cyclopentadiene, alkyl derivatives of monomeric, di-, tri and tetrameric cyclopentadiene, dimers of cyclopentadiene and isoprene, and dimers of cyclopentadiene and piperylene,
b) 1 to 40% by weight of natural resin acids and
c) 31 to 70% by weight of phenol resins and optionally,
d) unsaturated compounds selected from the group consisting of propylene, butene, butadiene, pentene, cyclopentene, styrene, α-methyl styrene, vinyl toluene, indene and methyl indene.

2. Modified cyclopentadiene resins according to claim 1, obtainable by reaction of a) 25 to 60 % by weight of cyclopentadiene compounds, b) 5 to 30 % of natural resin acids, and c) 35 to 60 % by weight of phenolic resins

3. Modified cyclopentadiene resins according to claim 1, wherein the resin is obtainable by reacting
a) 30 to 50 % by weight of cyclopentadiene compounds,
b) 10 to 20 % by weight of natural resin acids,
c) 40 to 55 % by weight of phenolic resins.

4. A process for the preparation of the cyclopentadiene resins as claimed in claim 1, wherein the components a) and b) and optionally, d), are first reacted and the reaction product obtained is then reacted with the component c).

5. Use of the cyclopentadiene resins as claimed in claim I as binder resins for printing inks.

## Revendications

1. Résines cyclopentadiéniques modifiées, que l'on peut obtenir par réaction essentiellement
a) de 25 à 80 % en poids de composés de cyclopentadiène, pris dans le groupe du cyclopentadiène, des di-, tri- et tétramères du cyclopentadiène, des dérivés d'alkyles de mono-, di- et tétramères du cyclopentadiène, des dimères du cyclopentadiène-isoprène, des dimères du cyclopentadiène-piperylène,
b) de 1 à 40 % en poids d'acides résiniques naturelles,
c) de 31 à 70 % en poids de résines phénoliques et éventuellement
d) de composés insaturés, pris dans le groupe comportant le propylène, le butène, le butadiène, le pentène, le cyclopentène, le cyclohexène, le styrène, l'alpha-méthylstyrène, le vinyltoluène, l'indène et le méthylindène.

2. Résines cyclopentadiéniques modifiées selon la revendication 1, caractérisées en ce que l'on peut obtenir la résine par réaction
a) de 25 à 60 % en poids, de composés de cyclopentadiène
b) de 5 à 30 % en poids d'acides résiniques naturelles
et
c) de 35 à 60 % en poids de résines phénoliques.

3. Résines cyclopentadiénique modifiées selon la revendication 1, caractérisées en ce que la résine peut être obtenue par réaction
a) de 30 à 50 % en poids de composés de cyclopentadiène,
b) de 10 à 20 % en poids d'acides résiniques naturelles
et
c) de 35 à 60 % en poids de résines phénoliques.

4. Procédé de préparation des résines cyclopentadiéniques selon la revendication 1, caractérisé en ce qu'on fait réagir d'abord les composants a), b) et éventuellement d) et ensuite, le produit de réaction obtenu, avec le composant c).

5. Utilisation des résines cyclopentadiéniques selon la revendication 1, comme résines liantes pour les encres d'imprimerie.
